(19) Europäisches Patentamt
European Patent Office
Office européen des brevets

(11) **EP 2 037 636 B1**

(12) **EUROPEAN PATENT SPECIFICATION**

(45) Date of publication and mention
of the grant of the patent:
**11.11.2009   Bulletin 2009/46**

(51) Int Cl.:
***H04L 12/56*** *(2006.01)*

(21) Application number: **07116523.7**

(22) Date of filing: **14.09.2007**

(54) **Method and apparatus for configuring bandwidth in class-based networks**

Verfahren und Vorrichtung zur Einstellung der Bandbreite in klassenbasierten Netzwerken

Procédé et appareil pour la configuration de la bande passante dans des réseaux à base de classes

(84) Designated Contracting States:
**DE GB**

(43) Date of publication of application:
**18.03.2009   Bulletin 2009/12**

(73) Proprietor: **NTT DoCoMo, Inc.**
**Tokyo (JP)**

(72) Inventors:
• **Neto, Augusto**
**3030-049 Coimbra (PT)**
• **Curado, Marilia**
**3040-688 Coimbra (PT)**
• **Monteiro, Edmundo**
**3040-688 Coimbra (PT)**
• **Mendes, Paulo**
**81673 Munich (DE)**

(74) Representative: **Betten & Resch**
**Patentanwälte**
**Theatinerstrasse 8**
**(Fünf Höfe)**
**80333 München (DE)**

(56) References cited:
**US-A1- 2003 081 626**

• **ALI M A ET AL: "Dynamic bandwidth allocation for quality-of-service over ethernet PONs" IEEE JOURNAL ON SELECTED AREAS IN COMMUNICATIONS, IEEE SERVICE CENTER, PISCATAWAY, US, vol. 21, no. 9, November 2003 (2003-11), pages 1467-1477, XP011103042 ISSN: 0733-8716**

EP 2 037 636 B1

## Description

### FIELD OF INVENTION

The present invention relates to a method and an apparatus for configuring bandwidth on class-based networks.

### BACKGROUND OF THE INVENTION

The Next Generation Networks (NGN) are envisioned to provide real-time Quality of Service (QoS) aware multi-user communication services, such as IPTV, radio, file distribution and push media, where the content can be distributed simultaneously to groups of users, independent of the connectivity control schemes supported inside or between networks along the distribution path. To effectively provide the Next Generation Applications, the distribution path must be efficiently provisioned with enough resources (e.g., bandwidth) to ensure the QoS level along the entire lifetime of the session. In order to achieve this objective, the implementation of control mechanisms is required to ensure the session continuity along the entire path.

From the QoS point of view, class-based approaches, such as DiffServ (see e.g. S. Blake, D. Black, M. Carlson, E. Davies, Z. Wang, and W. Weiss, "An architecture for differentiated services", RFC 2475, IETF, December 1998), surpasses per-flow approaches since it enables the distribution of a large number of sessions preserving the system scalability by aggregating the packets into a limited number of Class of Service (CoS) and storing/manipulating less state. From the resource provision point of view, dynamic solutions increase the system efficiency in comparison to static solutions, since, for instance, the on-demand scheme provides flexible resource allocation and optimises wastages when releasing them as soon as used no longer.

The required resources are configured in the distribution path through the support of a signalling protocol, which triggers the agents along the data path providing the required amount of resources and control operations (reservation, modification, releasing or refreshing). However, on-demand QoS provisioning may compromise the system performance in terms of bandwidth consumption, because the number of signalling events increase proportionally to the number of resource request receptions. For instance, the network is signalled for resource allocation whenever a new request is received, and moreover soft-state based solutions periodically exchange messages aiming at the management of both, state maintenance and system robustness.

An alternative for optimising the signalling overhead is over-provisioning the QoS resources, which means to provision a network with more bandwidth than currently required. In this context, the over-reservation of bandwidth combined with admission control enable local decisions without the need of on-demand signalling exchanges for further state manipulation. However, this scheme leads to both, wastage and poor management of resources, compromising thus the efficiency of the resource control mechanism and the performance of the environment.

All the available solutions with support to over-reservation work on-demand to calculate the over-reservation and configures the resources in the distribution path via a two-pass signalling schema. This way, the system performance may be compromised in terms of additional processing for calculating over-reservations, and moreover, two pass signalling schemes may increase the delay of the session set-up by first probing the data path about the network resources to then configure the resources.

The Border Gateway Reservation Protocol (BGRP) (see e.g. P. Pan, E. Hahne, and H. Schulzrinne, "BGRP: A Tree-Based Aggregation Protocol for Inter-domain Reservations", Journal of Communications and Networks, Vol. 2, No. 2, June 2000) is a two-phase signalling schema which creates provisioned sink-trees for unicast traffic distribution. The static quantization (Q) over-reservation approach results in poor bandwidth management and leads to waste of resources.

In addition, the Shared-segment Inter-domain Control Aggregation Protocol (SICAP) (see e.g. R. Sofia, R. Guerin, and P. Veiga, "SICAP, a Shared-segment Inter-domain Control Aggregation Protocol", High Performance Switching and Routing, HPSR 2003, Turin, Italy, June 2003) is a solution with similar signalling approach as BGRP to create shared-segment trees. The dynamic over-reservation scheme supported by SICAP, which assigns a single aggregation per shared segment, does not fit well in class-based networks once multiple aggregations (classes) may share the same segment with different QoS requirements. For instance, SICAP may not be able to handle class starvation.

The contradiction with the simple core DiffServ concept is the major drawback of SICAP and BGRP, where the complexity of processing aggregations/deaggregations is pushed to the forwarding nodes. Moreover, SICAP and BGRP use a two-pass signalling schema which may increase the session set-up time.

An example can be found in US 2003/081626.

### SUMMARY OF THE INVENTION

According to one embodiment there is provided a method configuring of bandwidth in class based networks by over-provisioning bandwidth, said method comprising:

assigning during an initialisation phase an amount of bandwidth to each CoS class of service (Cos) taking into consideration predefined quality of service (QoS) parameters, wherein said assigning comprises assigning to each CoS a fraction of the total bandwidth as peak threshold and reserving a fraction of the assigned peak threshold as a reserved bandwidth for said each of said CoS;

maintaining the bandwidth currently under use in each CoS, wherein any resource request for bandwidth in a certain CoS is granted as long as the requested bandwidth plus the bandwidth currently used is not larger than the reserved bandwidth; and

if there is received a resource request in a certain CoS such that it has not enough bandwidth reserved to accommodate said request, computing an over-reservation amount B$ov(i)$ by which the affected CoS is overprovisioned with bandwidth for future requests such that there is a surplus bandwidth of at least B$ov(i)$, wherein the bandwidth $Bov(i)$ is computed based on the amount of significance that the resource request has on the peak threshold assigned to said affected CoS, said amount of significance being computed based on the peak threshold minus the sum of the used bandwidth and the requested bandwidth in the affected CoS divided by said peak threshold.

By provisioning during an initialisation phase the bandwidth there is saved signalling efforts. The peak and reserved bandwidth are initially provisioned (e.g. during bootstrap or an initialisation phase) and then operation may start. The reserved resources may suffice, but there is provided an overprovisioning scheme which in case of a resource request cannot be met by the reserved bandwidth a new reservation amount is computed which overreserves a surplus amount of bandwidth Bov(i). This surplus amount is not static and it is not simply based on the requested resource but it is based on the significance the requested resource has on the Peak threshold, and this significance is indicated by the peak threshold minus the sum of the used bandwidth and the requested bandwidth divided by the peak threshold. In this manner the significance gets lower the closer the requested bandwidth brings the used bandwidth towards the peak threshold. The closer it gets the lower is the amount of significance and correspondingly also the resulting overprovisioned amount B$ov(i)$. In case the sum of the used bandwidth and the requested bandwidth reaching the peak threshold B$ov(i)$ even reaches zero and an overprovisioning becomes impossible.

According to one embodiment said bandwidth B$ov(i)$ is computed based on the bandwidth used in said affected CoS times said amount indicating said significance of said resource request on said peak threshold. In this manner the amount of bandwidth used may taken into account. The B$ov(i)$ may in one embodiment be computed such that if the used bandwidth increases also B$ov(i)$ increases.

According to one embodiment the B$ov(i)$ is calculated based on the product of the used bandwidth and the amount of significance of the resource request, the latter being based on the peak threshold minus the sum of the used bandwidth and the requested bandwidth divided by the peak threshold.

In this way the amount of overprovisioning B$ov(i)$ can be computed such that it is flexibly computed based on the available bandwidth, the peak threshold, the requested bandwidth and the used bandwidth, whereas a fraction of the used bandwidth is used for overprovisioning such that the fraction is based on the ratio between the available bandwidth and the peak threshold.

According to one embodiment said added bandwidth B$ov(i)$ is computed based on the following:

$$\mathrm{Bov}(i) = \frac{\mathrm{Bu}(i)}{\mathrm{Pth}(i)} * (\mathrm{Pth}(i) - \mathrm{Bu}(i) - \mathrm{Brq}(i))$$

where:

B$ov(i)$ -   Over-reservation bandwidth of class $i$;
B$u(i)$ -   Bandwidth in use by class $i$;
B$rq(i)$ -   Bandwidth required by class $i$;
B$rv(i)$ -   Bandwidth reserved to class $i$;
Pth($i$) -   Peak threshold of class $l$;

and where the overreservation succeeds when B$ov(i) > 0$.

According to one embodiment the method comprises: if said computation of a new overreservation fails, re-adjusting the peak bandwidth of the affected CoS in which the overreservation failed by using a still available share of bandwidth of one or more of the other classes of service.

In this way an overprovisioning may be achieved even if the peak threshold of the class where the request originated would prohibit it. The usage and redistribution of bandwidth from other classes where there is free bandwidth (still available bandwidth) which has not yet been reserved towards the CoS where the request relates to can create free bandwidth in this class so that an overprovision may be performed. The still available bandwidth may e.g. be the difference between the peak threshold and the reserved bandwidth, or it may be the difference between the peak threshold and the committed bandwidth in this class.

According to one embodiment said method comprises:

computing for each of the other classes of service a fraction of the still available bandwidth by which the peak threshold for the other classes may be reduced, the still available bandwidth being computed based on the peak threshold of the class minus either the reserved bandwidth or the committed bandwidth in said class, and reducing the peak bandwidth of said other classes by the computed fraction of the still available bandwidth, and adding the reduced amount of bandwidth of the other classes of service to the class of service where the overreservation has failed.

This achieves a redistribution of unused (non-reserved ) bandwidth from other classes towards the class where the request relates to.

According to one embodiment said fraction by which the peak bandwidth is to be reduced is computed based on a bandwidth index computed based on a difference between the reserved bandwidth and the used bandwidth, said difference being divided by the reserved bandwidth.

This takes into account the extent to which the reserved bandwidth is actually used. The larger the extent to which it is used, the smaller this index becomes, and accordingly the smaller becomes the fraction usable for adjustment.

According to one embodiment said fraction by which the peak bandwidth is to be reduced is computed based a threshold index computed based on the difference between the peak threshold and either the reserved bandwidth or the committed bandwidth, said difference being divided by the peak threshold.

This takes into account the extent to which the reserved bandwidth or the committed bandwidth comes close to the peak threshold. The larger the extent to which it comes close to the peak threshold, the smaller this index becomes, and accordingly the smaller becomes the fraction usable for adjustment.

According to one embodiment said fraction is computed based on a combination of said bandwidth index and said threshold index.

According to one embodiment said readjustment amount for class (i) Pth(i) is calculated based on

$$B\_Idx(j) = \left( \frac{Brv(j) - Bu(j)}{Brv(j)} \right)$$

$$Pth\_Idx(j) = \left( \frac{Pth(j) - Bref(j)}{Pth(j)} \right)$$

$$Brl\_Pth(j) = \left( \frac{B\_Idx(j) + Pth\_Idx(j)}{2} \right) * (Pth(j) - Bref(j))$$

$$Pth(i) \leftarrow \sum Brl\_Pth(j)$$

where:

B_Idx(i) - Bandwidth index of class i;
Pth_Idx(i) - Peak threshold index of class i;
Brl_Pth(i) - Bandwidth for releasing from the peak threshold of class i;
Pth(i) - Peak threshold of the class i;
Brv(i) - Bandwidth reserved for class i;
Bu(i) - Bandwidth in use by class i;
Bref(i) - Bandwidth reference of class i (either, bandwidth reserved or committed of class i).

According to one embodiment there is provided an apparatus for configuring of bandwidth in class based networks by over-provisioning bandwidth, said apparatus comprising:

a module for assigning during an initialisation phase an amount of bandwidth to each CoS class of service (CoS) taking into consideration predefined quality of service (QoS)
parameters, wherein said assigning comprises assigning to each CoS a fraction of the total bandwidth as peak threshold and reserving a fraction of the assigned peak threshold as a reserved bandwidth for said each of said CoS;
a module for maintaining the bandwidth currently under use in each CoS, wherein any resource request for bandwidth in a certain CoS is granted as long as the requested bandwidth plus the bandwidth currently used is not larger than the reserved bandwidth;
and
a module for if there is received a resource request in a certain CoS such that it has not enough bandwidth reserved to accommodate said request, computing an over-reservation amount B$ov(i)$ by which the affected CoS is overprovisioned with bandwidth
for future requests such that there is a surplus bandwidth of at least B$ov(i)$, wherein the bandwidth B$ov(i)$ is computed based on the amount of significance that the resource request has on the peak threshold assigned to said affected CoS, said amount of significance being computed based on the peak threshold minus the sum of the used bandwidth and the requested bandwidth in the affected CoS divided by said peak threshold.

According to one embodiment the apparatus comprises means for carrying out a method according to an embodiment of the invention.
According to one embodiment there is provided a computer program which when being executed on a computer enables said computer to carry out a method according to one of the embodiments of the invention.

## DESCRIPTION OF THE DRAWINGS

Fig. 1 shows a scenario in which an embodiment of the invention can be used.
Fig. 2 schematically illustrates the interfaces used by a node according to an embodiment of the invention.
Fig. 3 schematically illustrates the initialization according to an embodiment of the invention.
Fig. 4 a state diagram of a mechanism according to an embodiment of the invention.
Fig. 5 schematically illustrates the initialized resources according to an embodiment of the invention.
Fig. 6 schematically illustrates the computation for overreservation according to an embodiment of the invention.
Fig. 7 schematically illustrates the readjustment of resources according to an embodiment of the invention.
Fig, 8 schematically illustrates the renewed overprovisioning according to an embodiment of the invention

## DETAILED DESCRIPTION

Before describing embodiments of the invention, at first some terms are clarified.
Access router - Router linked to the access network in which a receiver belongs to;

AS - Autonomous Systems;
BR - Border Router (ingress or egress);
Downstream - Direction from the ingress node to an egress or access node;
Upstream - Direction from the egress node to an ingress node;
Unicast Routing Information Base (RIB) - The unicast topology table.

The embodiments of the invention provide a mechanism for Advanced QoS Resource AlloCation (hereinafter also referred to as ASAC) which is a solution to efficiently over-provision QoS resources in class-based networks operating based on a one-pass signalling schema to speed-up the session set-up. The ASAC mechanism dimensions the QoS resources for each CoS (class of Service) during an initialisation phase (such as e.g. in the system bootstrap), in order to not compromise the network performance. Moreover, local decisions are taken for each session request without on-demand signalling the network for session set-up. The per-class over-reservation is recalculated on-demand, that is, when a reservation is not enough to satisfy a session QoS requirement. The ASAC mechanism fills the gap of waste of QoS resources by distributing the bandwidth between the CoSs, in which the affected CoS is redimensioned with the resources that are not used by the remaining classes.

As support for the efficient accomplishment of the functionalities described above, according to one embodiment the ASAC mechanism implements a dynamic over-reservation scheme, a new network resource management model and a single-pass signalling protocol.

The ASAC mechanism over-provisions the QoS resources by implementing per-class over-reservation, which consists in reserving surplus bandwidth to each CoS. Firstly, during an initialisation phase the ASAC mechanism initialises the QoS resources in-advance, assigning amount of bandwidth to each CoS in the system bootstrap taking into consideration predefined QoS parameters such as parameters defined by the network administrator or retrieved from external mechanisms (e.g., SLS controllers). Whenever a CoS has not enough bandwidth reserved to accommodate a request, the ASAC mechanism computes a new over-reservation so that the affected CoS is provisioned for future requests. In order to avoid potentially waste of resources due to over-reservation, according to one embodiment the ASAC mechanism is enhanced with a resource management schema which re-adjusts the affected CoS with the sum of the over-reserved share of bandwidth, but currently not in use, of the remaining CoSs. The task of choosing how much bandwidth will be removed from each CoS is computed without compromising the capacity of the CoS to accommodate future requests.

The ASAC mechanism significantly optimises the signalling overhead through combining admission control and QoS, where on-demand request signalling is not accomplished. The tasks for initialising the QoS resources for each CoS are accomplished during an initialisation phase such as in the system bootstrap without requiring session requests, aiming at the optimisation of the network performance. The resource management schema reduces the blocking probability, once the CoSs are re-adjusted on-demand. In addition, the mechanism according to one embodiment comprises the following:

- The sender of a session defines the QoS requirements, priorities and rates of each flow, called *session object*;
- Each receiver gets the session object from the sender by any off-line or on-line means;
- Each receiver sends the session object to an agent in the network to which it is connected at the session set-up time;
- A protocol or mechanism in the network agent uses the session object to request the allocation of resources for each flow of the session in each domain along the session path (from the sender to receiver);
- The network supports an inter-domain routing protocol (e.g., BGP) for retrieving the egress routers within the network;
- Routers must recognise IP Routing Alert Option (see e.g. RFC2113).

The ASAC functionalities are supported by agents located at the edge and core routers, which are hereinafter respectively called ASAC Edge agent (ASAC-E) and ASAC Core agent (ASAC-C). The ASAC-E agents are statefull in order to control the admission of the sessions and initiate the operations to control the over-provisioning and management of the QoS resources in the entire network. An ASAC-E agent implements internal and external interfaces to, for instance, interact with other ASAC agents and communicate with external protocols or mechanism respectively. In contrast, according to one embodiment ASAC-C agents are reduced state (per-class/ingress) and only support internal interfaces to configure the required resources upon signalled. Thus, the system scalability is achieved by pushing the complex resource control to the edge nodes, and leaving the core nodes simple.

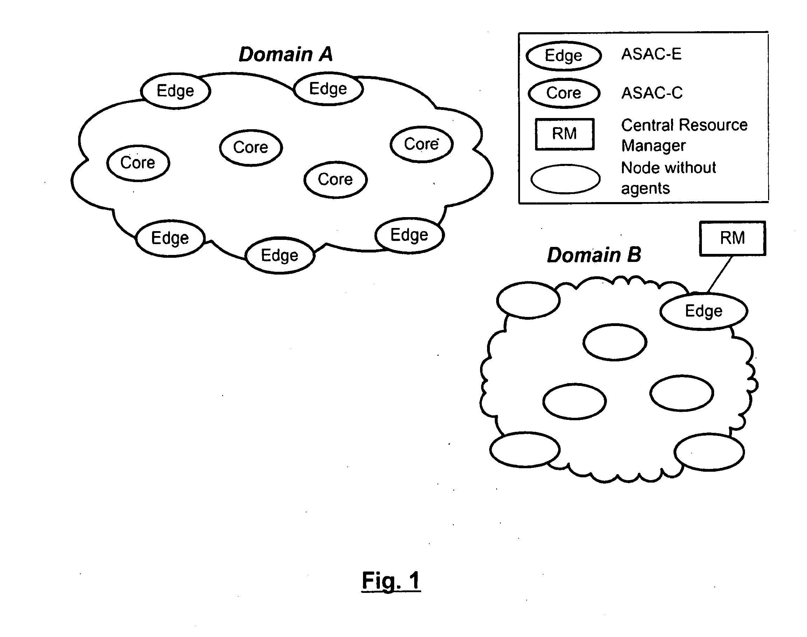

By default, the ASAC mechanism operates in a distributed way for over-provisioning QoS resources. However, it can operate in centralised manner according with the QoS approach supported by the environment. Fig. 1 shows an example of ASAC agents' location in a heterogeneous scenario. The domain A controls the resources in a distributed way, thus ASAC-E agents are placed at the edge nodes together with network agents and ASAC-C agents are in the core nodes. However, the domain *B* controls the resources via centralised mechanisms, where the resource controller (e.g., Bandwidth Broker) and ASAC-E agent are located in the same node.

Besides working centralised or distributed, the ASAC mechanism may be able to operate end-to-end or edge-to-edge. In the former case, there is provided a session control mechanism to trigger ASAC at the ingress routers and control the session connectivity between and inside the domains.

In order to implement the functionalities supported by ASAC, according to one embodiment the following interfaces are provided:

- Application Interface: Used to expose ASAC to external mechanisms or protocols aiming at receive requests carrying the session object, and feedback its accomplishment. For instance, whereas an external session signalling protocol can used this interface to request resources for flows within a domain, the ASAC mechanism also uses it to confirm its successful accomplishment. In addition, the ASAC mechanism can receive indication to re-allocate resources of ongoing session-flows when new users are interested in the session or due to the movement of the user to another domain;

- QoS Control Interface. Used to acquire information about QoS capability by interacting with the Management Information Base (MIB). For instance, the ASAC mechanism is able to retrieve information about the policies of DiffServ or the amount of bandwidth reserved for each CoS. In addition, the ASAC mechanism uses this interface to over-provision the QoS resources by reserving per-class bandwidth, such as by properly configuring packet schedulers. Reconfiguration of resources is also supported by the ASAC mechanism, such as by reconfiguring the marker to map the ongoing flows into another CoS or a reservation preciously accomplished. In cluster with a central resource controller, the ASAC mechanism uses this interface to trigger the central controller. Moreover, the ASAC mechanism can interact with SLS controllers for network provisioning or query for resource information for instance;

- Communication/routing Interface: Used to exchange messages which carry control information as support for the operations of the ASAC agents. Moreover, the ASAC mechanism uses this interface to interact with the available unicast routing protocol (e.g., OSPF) to retrieve in the Routing Information Base (RIB) the outgoing interface for further processing. In addition, the ASAC mechanism detects re-routing events through, for instance, interacting with the OSFP since it is indicated by lower-level protocols whether a network interface becomes down (see e.g. J. Moy, "OSPF Version 2", The Internet Engineering Task Force - IETF, RFC2328, Apr 1998).

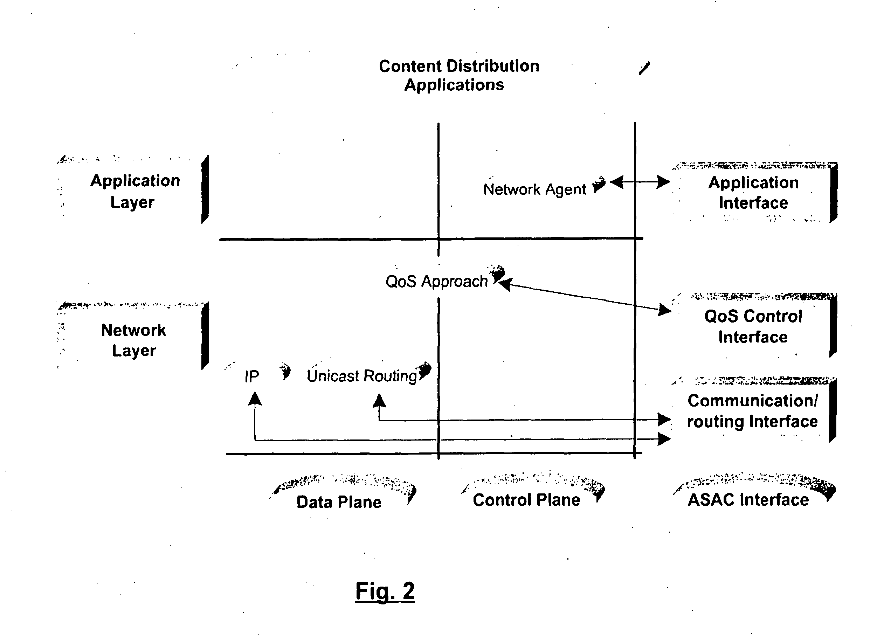

Figure 2 shows the interfaces supported by the ASAC agents. The exchange messages, which carry control information, between ASAC agents are implemented through the communication interface.

In the following the messages used by the ASAC mechanism according to one embodiment are explained.

Reserve: This message indicates the ASAC agents the required functionality and carries the amount of QoS state as support for accomplishing the operations. The ASAC agents support resource reservation, modification, releasing and refreshing. Message specific flags control the behaviour of the ASAC agents, indicating for instance when an operation must not be performed;

Response: Used to confirm the accomplishment of the requested operation and inform specific control information, such as the path in which the resources were configured and its capability. Whenever a node is informed by the routing protocol that an interface is down, this message is sent to all ingress nodes locally stored with a specific flag set indicating that a re-routing event was detected. When resulting from a refresh operation, the Response message carries information about the network capability in the bottleneck agent of each data path.

The ASAC mechanism according to one embodiment provides the following advantages:

- Controls the bandwidth automatically, minimising constant human interventions;
- Enhances the behaviour of multicast communications in multicast-aware networks;
- Reduces the session set-up time;
- Reduces significantly the signalling overhead.

Further embodiments of the invention will now be described in somewhat more detail in the following.

The ASAC mechanism controls the QoS resources within a network by implementing reservations, modifications, releasing or refreshing operations. The complex processing for taking decisions is pushed to the border routers, which are accomplished without per-request signallings. The core nodes perform lightweight resource control operations, which are triggered via signalling events. The QoS resources are reconfigured in a self-organised way when the ASAC mechanism detects the need, increasing thus the system independence in the resource control by not requiring constant external (e.g. human) interventions.

With the objective to provide support for accomplishing the operations, each ASAC-E agent stores lists of active sessions, flows and distribution paths. Each active session entry contains a list with the associated flows, and each flow entry keeps its CoS, bit rate (committed/peak), source address, destination address, egress address, access address and the distribution path. The list of paths stores the set of nodes which compose each distribution path, where a numerical index key is assigned to each one entry. Moreover, each path entry is filled with the capacity, supported CoSs and QoS characteristics (e.g., thresholds and reserved bandwidth) of the correspondent bottleneck link. The ASAC mechanism stores reservation state to each local outgoing interface, carrying the lists of the available CoSs, their correspondent reserved amount of bandwidth and the IP address of the associated requester ingress. Once the ASAC-C agents have reduced state, they only keep state related to the class resource reservation.

The following describes the functionalities implemented by the ASAC mechanism in over-provisioning a network.

For clarifying the required operations, there is illustrated the complete initialisation of a simple environment,.

1. QoS initialisation

The QoS resources are initialised by the ASAC mechanism in-advance during an initialisation phase (i.e., in the system bootstrap), since the environment is not under high utilisation. This way, the ASAC mechanism initialises the QoS resources without compromising the network performance in terms of bandwidth consumption due to the required signalling exchanges, and processing of operations due to the required state manipulation. The operations evolved in the QoS initialisation according to one embodiment are performed in a single-pass (i.e., at the same time), which consists in discovering the available distribution paths, retrieving their minimum resource capability and over-provisioning all supported CoS on each path.

The ASAC mechanism initialises the resources based on predefined QoS initialisation parameters, which may be provided by the network administrator or retrieved from external controllers (e.g., SLS controller). In this context, according to one embodiment two reservation thresholds are assigned to each CoS, where the Peak Threshold (Pth) means the maximum bandwidth (in terms of percentage of the local link) that can be initially occupied by a CoS, and the Committed Threshold (Cth) means the minimum bandwidth assured to the CoS. In addition, an Initialisation Index (Idx) is assigned (e.g., ½, ¼, etc), which is the share of the Pth that will be reserved to each CoS at the initialisation. This means that after initialisation each CoS has a peak threshold bandwidth which is the maximum bandwidth which can be reserved in this class, and it has a "reserved" bandwidth which is the initially reserved amount of bandwidth in this class.

Based on the QoS initialisation parameters, the ASAC mechanism on each ingress router, reserves the Idx share of the Pth associated to each CoS at all interfaces and broadcasts a RESERVE message with a flag (I) set, indicating initialisation, carrying the link capacity, supported CoSs and their resource capability. Moreover, the IP address of the outgoing interface is filled in the message for composing the list of nodes evolved in the distribution path. Upon received a RESERVE(I), each node initialises the CoSs in the same way and compares the local QoS capability with the information carried by the message. If the local capability is inferior, the information carried in the original message is updated, and after that, the local IP is added in the distribution path list and the message is broadcasted at all interfaces, except the interface in which the RESERVE(I) message was received. This task is accomplished by checking if the IP address of the incoming interface is filled in the distribution path list carried by the message. When the message reaches an egress, it initialises the QoS resources in the same way in the case of the ASAC mechanism operating end-to-end, otherwise (when operating edge-to-edge) no resource initialisation is accomplished, since the resources in the inter-domain link are controlled separately. After that, a RESPONSE message is composed carrying the distribution path list, the resource capability and a code confirming the successful of the operation, and sent towards the source of the RESERVE(I) (i.e., the ingress node). Upon received the RESPONSE message, the ingress node updates the path list and the QoS information.

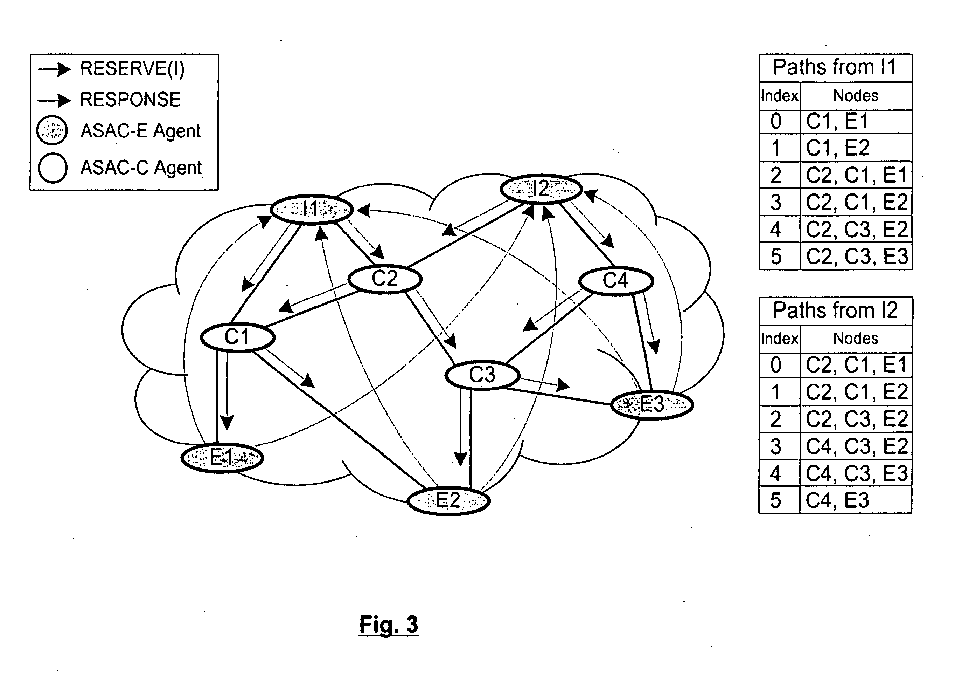

Figure 3 illustrates the operations to initialise the QoS resources in a generic environment. Firstly, the ASAC-E agent at the ingress nodes *I1* and *I2* provision the CoSs on each local outgoing interface based on the QoS initialisation parameters. After that, ASAC-E composes a RESERVE(I) carrying the link capacity, all supported CoSs and their resource capability, the distribution path list and broadcasts it. Whenever each ASAC-C agent receives the message, it provision the QoS resources in the same way, updates the distribution path list, updates the CoS resource capability when applicable and propagates the message downstream. After received a RESPONSE message, *I1* and 12 updates the path information and its resource capability accordingly. The distribution paths discovered by *I1* and *I2* in the scenario provided by Figure 3 are illustrated in the respective path tables, which do not show the resource capability for simplification.

2. Over-reservation Mechanism

The over-reservation mechanism has as main goal to compute a surplus share of bandwidth for updating an overloaded reservation of a selected CoS. The function presented in (1) computes the amount of bandwidth for adding to the requested bandwidth, so that over-reserve the selected CoS for future requests. Based on the available QoS capability information of the selected distribution path (from the ingress towards the egress node indicated in the resource request), with regards to its bottleneck link, ASAC works as follows. The function according to one embodiment computes the bandwidth for over-reservation by multiplying the utilisation ratio, between the bandwidth used by a CoS and its Pth, by the amount of bandwidth available, which also considers the bandwidth required by the request. The succeeds is achieved when $B_{ov}(i) > 0$, otherwise, it is realised that the class has overloaded its threshold.

$$Bov(i) = \overbrace{\frac{Bu(i)}{Pth(i)}}^{\text{Utilisation ratio}} * \overbrace{\left( Pth(i) - Bu(i) - Brq(i) \right)}^{\text{Bandwidth available}}, Bov(i) \geq 0 \quad (1)$$

Where:

Bov($i$) - Over-reservation bandwidth of class $i$;
Bu($i$) - Bandwidth in use by class $i$;
Brq($i$) - Bandwidth required by class $i$;
Brv($i$) - Bandwidth reserved to class $i$;
Pth($i$) - Peak threshold of class $i$.

In the case of a multicast tree, which may be composed by several egress nodes and, consequently, branch nodes, it must be firstly selected the path which associates the ingress of the tree and the egress router indicated in the session object of the request. ASAC is able to select the distribution path for processing based on the path state stored in the ingress router, where a multicast tree is stored as a set of ingress-to-egress distribution paths.

When a CoS can not be over-reserved (Bov($i$) ≤ 0), ASAC attempts to re-adjust the QoS resources already assigned to the classes. This is done by provisioning the Pth of the affected classes with the un-used over-reserved share of bandwidth of the remaining classes. The function presented in (2) computes the bandwidth index, which consists in the ratio between both the bandwidth reserved and used for the CoS, taking into account the QoS capability information of the bottleneck link in the selected distribution path. Function (3) computes the threshold index, which consists in the ratio between the peak threshold and a bandwidth reference which can be either the bandwidth reserved or committed threshold (Cth) of the class.

The bandwidth reserved is assigned to the bandwidth reference when its amount is bigger than the Cth, otherwise the Cth is assigned to the bandwidth reference. This way, ASAC avoids both starvation and QoS violations, since it is ensured at least the commitment of the classes. Moreover, this threshold-based scheme allows ASAC to overcome a common problem due to over-reservation (see e.g. K. Lu, G. Xiao, and I. Chlamtac, "Analysis of blocking probability for distributed lightpath establishment in WDM optical networks", IEEE/ACM Trans, Netw. 13, 1, Feb, 2005, 187-197), in which future connection requests may be blocked due to unavailable bandwidth whether too much network capacity is reserved for this request, by implementing the re-adjustment of the CoSs.

The share of bandwidth of each CoS which will be added to the affected CoS is given by function (4), which consists in the average between the bandwidth and peak threshold indexes multiplied by the amount of bandwidth retrieved by deducting from the peak threshold the bandwidth reference. Finally, function (5) provides the amount of bandwidth so as to readjust the affected class. The sequence for re-adjusting the resources between the CoSs is as follows. To each locally supported CoS $j$, except the affected one $i$ (where $j \in$ c={1,...,n}, $j \neq i$), ASAC firstly computes the function (2) and then the function (3). After that, ASAC computes the function (4) and adds to the current amount of the Pth for the affected CoS the result of function (5).

$$B\_Idx(j) = \left( \frac{Brv(j) - Bu(j)}{Brv(j)} \right) \quad (2)$$

$$Pth\_Idx(j) = \left( \frac{Pth(j) - Bref(j)}{Pth(j)} \right) \quad (3)$$

$$Brl\_Pth(j) = \left( \frac{B\_Idx(j) + Pth\_Idx(j)}{2} \right) * (Pth(j) - Bref(j)) \quad (4)$$

$$Pth(i) \leftarrow \sum Brl\_Pth(j) \qquad (5)$$

where:

B_Idx(i) -     Bandwidth index of class i;
Pth_Idx(i) -   Peak threshold index of class i;
Brl_Pth(i) -   Bandwidth for releasing from the peak threshold of class i;
Pth(i) -       Peak threshold of the class i;
Brv(i) -       Bandwidth reserved for class i;
Bu(i) -        Bandwidth in use by class i;
Bref(i) -      Bandwidth reference of class i (either, bandwidth reserved or committed of class i).

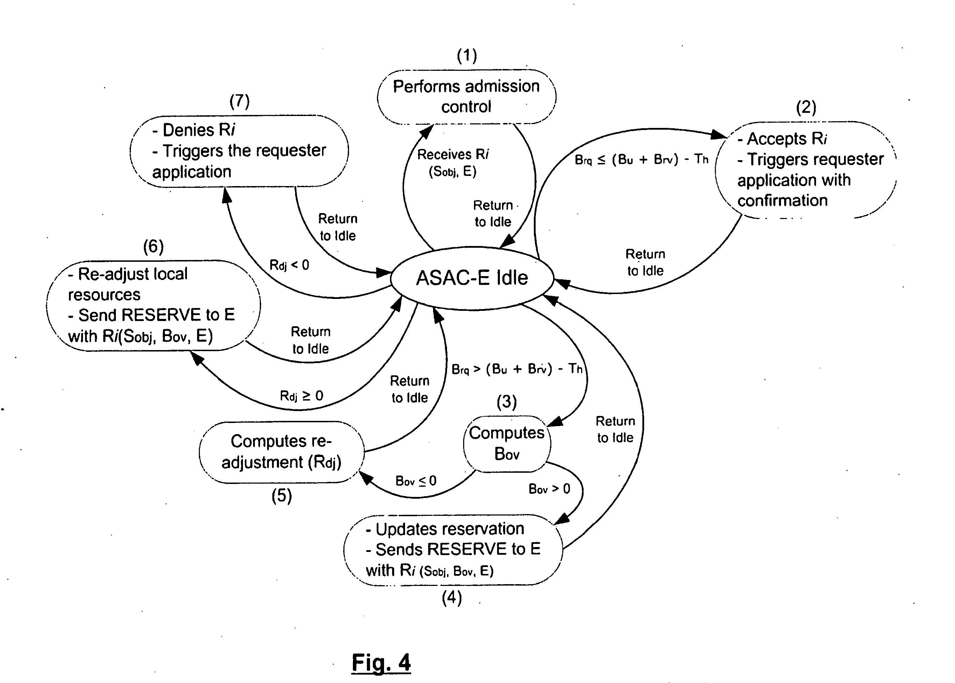

Figure 4 shows the state diagram of the operations accomplished by the ASAC mechanism at an ingress router. Whenever a session request $Ri$ is received, which carries the session object (Sobj) and the IP address of the destination egress router, the ASAC mechanism performs the admission control (state 1). Based on local information, if the bandwidth available in the selected distribution path is enough to accommodate requester flow, the ASAC mechanism accepts R$i$, updates the state and triggers the requester application (state 2), otherwise, the ASAC mechanism computes a new over-reservation (state 3) to the selected CoS. When Bov > 0, the ASAC mechanism just updates the current reservation for the selected CoS with B$ov$ + B$rq$ and signals the distribution path for further reconfiguration of the resources, otherwise the ASAC mechanism re-adjusts the resources between the CoSs. After successful re-adjusted the resources, the Pth of the classes are updated and the ASAC mechanism processes Ri again, where now the over-reservation will succeed. In the case of resource readjustment failure (Rdj < 0), the ASAC mechanism triggers the requester application denying R$i$.

The ASAC mechanism avoids QoS violation situations (e.g., when computing an over-reservation bandwidth which is not supported by one link along a path) by maintaining the resource capability information at each ingress router by soft-state. Therefore, according to one embodiment the ASAC mechanism periodically send RESERVE messages along each distribution path which to, beside refreshing the reservations, collect the QoS resource capability information (link capacity and, to each supported CoS, the peak/committed thresholds and reserved bandwidth) of the bottleneck link.

In the following there will be described the functionalities of an embodiment of the ASAC mechanism in over-provisioning and managing the QoS resources in a simple scenario. There is considered a network, in which the ASAC mechanism is configured to operate edge-to-edge, composed by one ingress and three egress routers. The flows of all session requests are mapped in the AF class and share the same distribution path, consisting in I-C1-E1 (path 0) for simplification.

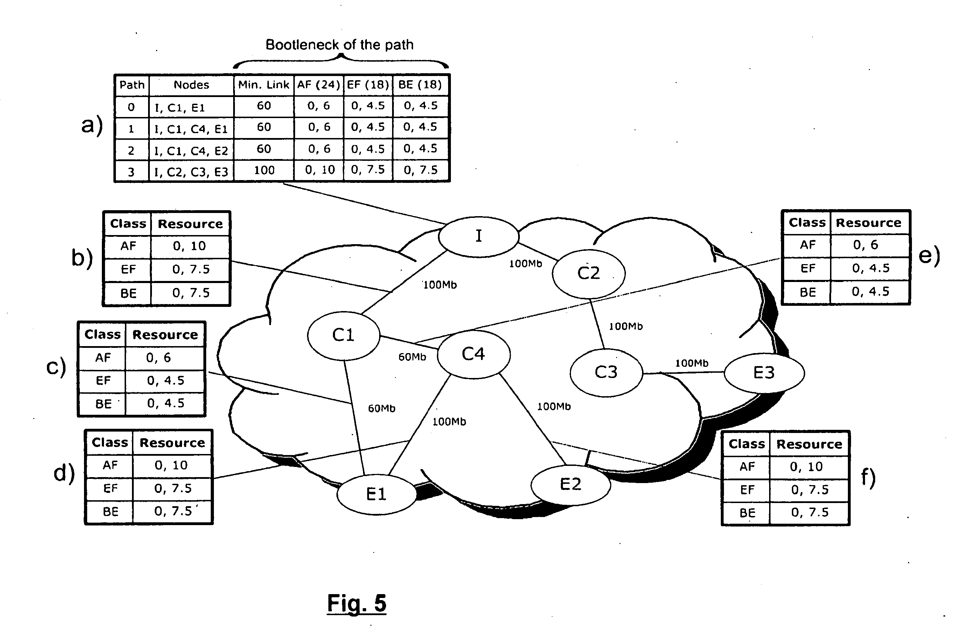

Figure 5 depicts the illustrative environment in which the QoS resources were previously initialised as described before. Consider that the Pth of the classes AF, EF and BE are 40%, 30% and 30% respectively, and the Cth for the same classes are 20%, 15% and 15% respectively. The table a) informs the paths maintained by ASAC-E agent at node I, being composed by the index key (*Path*), the set of nodes that compose the path (*Nodes*) and the resource capability of the minimum link (i.e., the bottleneck link). The later is composed by the link capacity (*Min. Link,* in Mb/s) and, to each supported CoS (class/*Pth* in Mb), the bandwidth used and reserved (in Mb). The tables from b) to f) inform the resource capability of the network link, namely the bandwidth used and reserved (in Mb) to each CoS.

As long as session requests from *R0* to *Rn-1* are received, the ASAC mechanism allocates the network resources and updates the tables accordingly (these events are not shown in the illustration of Figure 5).

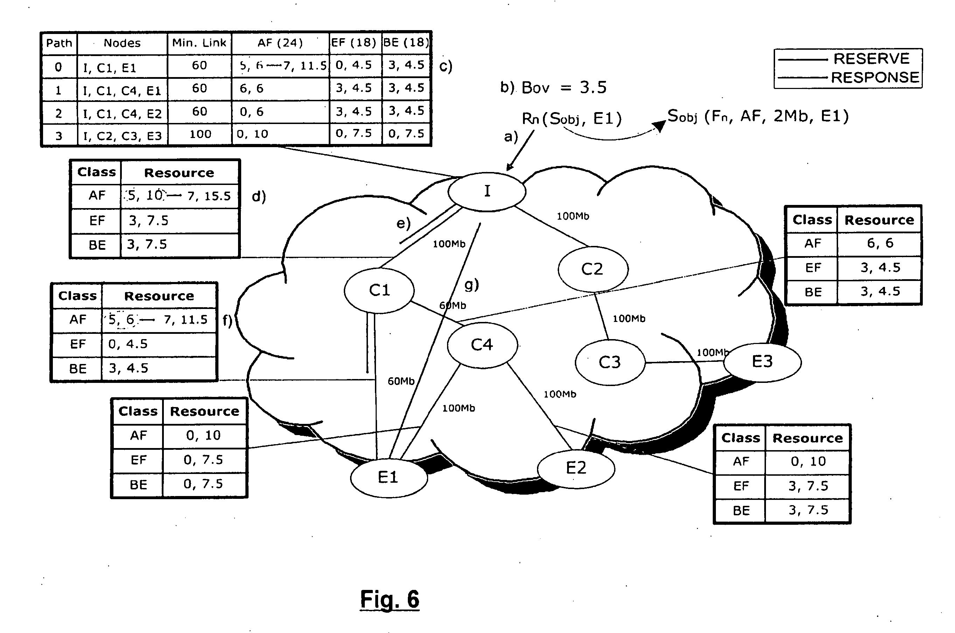

Figure 6 shows the operations for computing a new over-reservation for a CoS when a selected path has not enough resources for accepting a session request. Consider a session composed by the flow Fn, mapped in the AF class, with bit rate 2Mb and destination E1. When the ASAC mechanism receives the session request *Rn* (event a), it realises that the paths 0 and 1 have not enough available resources as required by *Rn*, since the path 0 has 1 Mb available for AF and path 1 has no resources available. Hence, the ASAC mechanism computes a new over-reservation, for the AF class in router I, where Bov(*AF*) = 3.5Mb (event b). After that, the ASAC mechanism updates the path information (event c) and AF reservation state (Brv←Bov + Brq) on router I to 11.5Mb (event d), *Rn* is accepted and a RESERVE message is sent towards E1 for updating the new reservation (event e). After agent C1 receive the RESERVE message, it updates the current reservation state accordingly (event f) and, after signalled, E1 sends a RESPONSE message towards I confirming the successful operation (event g).

One can see in Fig. 6 that for the bottleneck link C1-E1 the used bandwidth is 5 and the reserved bandwidth is 6. This means that the reserved bandwidth is not sufficient to cover the request, and the reserved bandwidth is therefore updated by adding to it the requested amount of 2 plus the calculated surplus amount of 3,5 so that there results a reserved bandwidth of 11,5. This approach of adding the requested amount plus the calculated surplus to the reserved bandwidth is one approach according to one embodiment to make sure that the surplus reservation is made.

According to a further embodiment it would also be possible to add the requested amount of 2 plus the calculated surplus amount of 3,5 not to the already reserved bandwidth but to the bandwidth presently in use and to reserve the corresponding resulting amount as a new reserved amount. This would result in a reserved bandwidth of 5+2+3,5=10,5 instead of 11,5, but it still would ensure that the calculated surplus amount Bov is available for further requests, because even if the request of 2 is granted and added to the currently used 5 there remains the surplus of 3,5.

The surplus amount which has been calculated may in the same way also be used to change the reservation for path I-C1, either as shown in Fig. 6 by adding the requested 2 plus the calculated surplus of 3,5 to the already reserved bandwidth of 10 resulting then in a reservation of 15.5, or by adding the (2+3,5) to the currently used bandwidth of 5 so that the resulting reserved bandwidth is 11.5 In the latter case the change of the reserved bandwidth may only be carried out if the resulting bandwidth which is the sum of the currently used bandwidth plus the requested bandwidth plus the calculated surplus is larger than the currently reserved bandwidth.

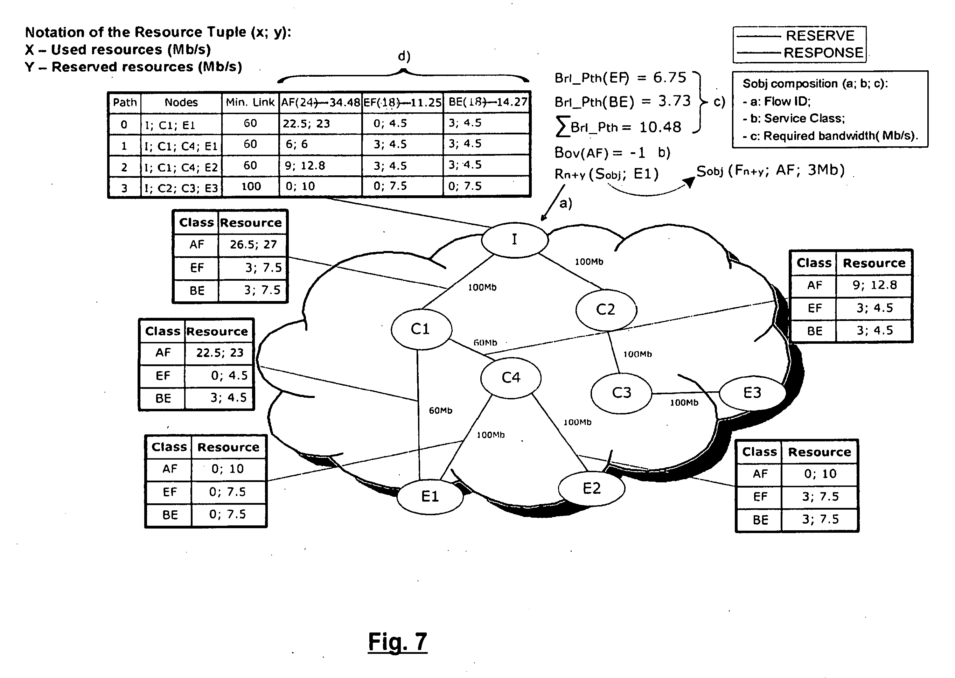

Figure 7 illustrates a scenario in which ASAC operates for re-adjusting the resources between the CoSs when the over-reservation computing fails. After having received *Rn+y* (event a) which requests an additional 3 Mb of resources, ASAC realises that there are not available resources in path 0, and moreover the over-reservation fails (*Bov*(AF) < 0) since the Pth is exceeded (event b). Then, ASAC processes the resource re-adjustment, retrieving thus the per-class amount (event c). Therefore, the ASAC mechanism adds to the AF Pth the sum of the values (ΣBrl_Pth) resulting from the readjustment computing (event d), and decreases the Pth of the remaining classes accordingly.

Regarding the concrete example given in Fig. 7, at first there is calculated the bandwidth index for class EF based on equation (2) which results in (4,5-0)/4,5=1.

Then there is calculated the threshold index for class EF, where the committed threshold which in the given example is 15% of the peak threshold, i.e. 15% of 60=9, is higher that the reserved bandwidth of 4,5. Therefore equation (3) becomes (18-9)/18=0,5.

Based on equation (4) then the average between the bandwidth index and the threshold index which is 0,75 is multiplied with the difference between the peak threshold and the bandwidth reference, i.e. equation (4) becomes ((1+0,5)/2)*(18-9)=6,75. This is the value which may be deducted from class EF and added to class AF.

In the same manner the calculation is made for class BE resulting in an amount of 3,73 so that the resulting bandwidth added to class AF according to equation (5) becomes 6,75+3,73=10,48.

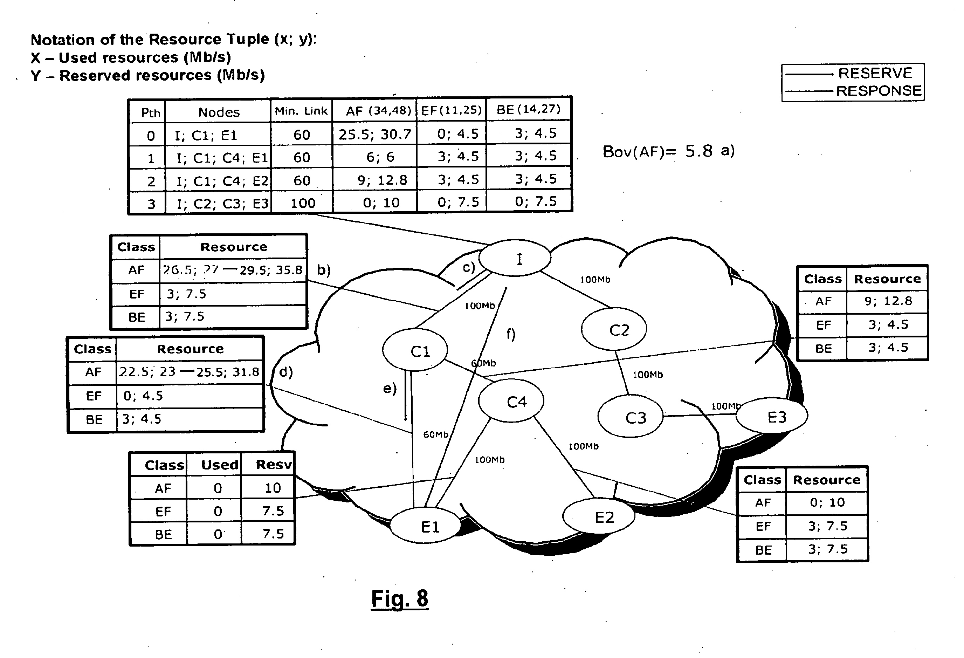

After succeeding the resource re-adjustment between the CoSs supported in path 0, ASAC processes *Rn+y* again as shown in Fig. 8. Since the Pths now are provisioned with enough resources, the over-reservation computing succeeds (event a). After that, ASAC updates the reservation state in I (event b), composes and sends a RESERVE message towards E1 (event c). Upon signalled, C1 updates the reservation accordingly (event d) and propagates the RESERVE message to E1 (event e), which then sends a RESPONSE message to I (event f) confirming the success of the operation.

According to one embodiment the renewed over-reservation may be carried out by adding the calculated over-reservation amount (here 5,8) plus the requested amount to the currently used amount, or it may be added to the currently reserved amount. The new (over) reservation may succeed if after the readjustment there is sufficient bandwidth for the renewed over-reservation attempt.

According to one embodiment the calculation of the readjustment values for the resources are carried out based on the parameters in the bottleneck connection of the path being considered.

According to one embodiment, after the readjustment of resources betweeen classes there is attempted once again to perform an overreservation based on the new parameters. If it is successful based on the new parameters, the overreservation is then performed.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element (such as a router) in a network which is suitably programmed such that it is able to carry out a bandwidth configuration as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore

Embodiments of the invention may be implemented e.g. by nodes in a network or any entities in a network which are programmed to operate in accordance with the bandwidth configuration mechanisms as described before.

**Claims**

1. A method for configuring of bandwidth in class based networks by over-provisioning bandwidth, said method comprising:

   assigning during an initialisation phase an amount of bandwidth to each class of service, CoS, taking into consideration predefined quality of service, QoS, parameters, wherein said assigning comprises assigning to each CoS a fraction of the total bandwidth as peak threshold and reserving a fraction of the assigned peak threshold as a reserved bandwidth for said each of said CoS;
   maintaining the bandwidth currently under use in each CoS, wherein any resource request for bandwidth in a certain CoS is granted as long as the requested bandwidth plus the bandwidth currently used is not larger than the reserved bandwidth; and
   if there is received a resource request in a certain CoS such that it has not enough bandwidth reserved to accommodate said request, computing an over-reservation amount B$ov(i)$ by which the affected CoS is overprovisioned with bandwidth for future requests such that there is a surplus bandwidth of at least B$ov(i)$, wherein the bandwidth B$ov(i)$ is computed based on the amount of significance that the resource request has on the peak threshold assigned to said affected CoS, said amount of significance being computed based on the peak threshold minus the sum of the used bandwidth and the requested bandwidth in the affected CoS divided by said peak threshold.

2. The method of claim 1, wherein
   said bandwidth B$ov(i)$ is computed based on the bandwidth used in said affected CoS times said amount indicating said significance of said resource request on said peak threshold.

3. The method of claim 1, wherein said added bandwidth B$ov(i)$ is computed based on the following:

$$\mathrm{Bov}(i) = \frac{\mathrm{Bu}(i)}{\mathrm{Pth}(i)} * (\mathrm{Pth}(i) - \mathrm{Bu}(i) - \mathrm{Brq}(i))$$

   where:

   B$ov(i)$ - Over-reservation bandwidth of class $i$;
   B$u(i)$ - Bandwidth in use by class $i$;
   B$rq(i)$ - Bandwidth required by class $i$;
   B$rv(i)$ - Bandwidth reserved to class $i$;
   Pth($i$) - Peak threshold of class $i$;
   and where the overreservation succeeds when B$ov(i)$ > 0.

4. The method of one of the preceding claims, further comprising:

   if said computation of a new overreservation fails, re-adjusting the peak bandwidth of the affected CoS in which the overreservation failed by using a still available share of bandwidth of one or more of the other classes of service.

5. The method of claim 4, further comprising:

computing for each of the other classes of service a fraction of the still available bandwidth by which the peak threshold for the other classes may be reduced, the still available bandwidth being computed based on the peak threshold of the class minus either the reserved bandwidth or the committed bandwidth in said class, and reducing the peak bandwidth of said other classes by the computed fraction of the still available bandwidth, and adding the reduced amount of bandwidth of the other classes of service to the class of service where the overreservation has failed.

6. The method of one of claims 4 to 5, wherein
said fraction by which the peak bandwidth is to be reduced is computed based on a bandwidth index taking into account the extent to which the reserved bandwidth is actually used such that the larger the extent to which it is used, the smaller becomes the fraction usable for adjustment, and/or
said fraction by which the peak bandwidth is to be reduced is computed based on a threshold index taking into account the extent to which the reserved bandwidth or the committed bandwidth comes close to the peak threshold such that the larger the extent to which it comes close to the peak threshold the smaller becomes the fraction usable for adjustment.

7. The method of one of claims 4 to 6, wherein
said fraction by which the peak bandwidth is to be reduced is computed based on a bandwidth index computed based on a difference between the reserved bandwidth and the used bandwidth, said difference being divided by the reserved bandwidth.

8. The method of one of claims 4 to 7, wherein
said fraction by which the peak bandwidth is to be reduced is computed based a threshold index computed based on the difference between the peak threshold and either the reserved bandwidth or the committed bandwidth, said difference being divided by the peak threshold.

9. The method of one of claims 4 to 8, wherein
said fraction is computed based on a combination of said bandwidth index and said threshold index.

10. The method of one of claims 4 to 9, wherein
said readjustment amount for class (i) Pth(i) is calculated based on

$$ B\_Idx(j) = \left( \frac{Brv(j) - Bu(j)}{Brv(j)} \right) $$

$$ Pth\_Idx(j) = \left( \frac{Pth(j) - Bref(j)}{Pth(j)} \right) $$

$$ Brl\_Pth(j) = \left( \frac{B\_Idx(j) + Pth\_Idx(j)}{2} \right) * (Pth(j) - Bref(j)) $$

$$Pth(i) \leftarrow \sum Brl\_Pth(j)$$

where:

B_Idx(i) - Bandwidth index of class i;
Pth_Idx(i) - Peak threshold index of class i;
Brl_Pth(i) - Bandwidth for releasing from the peak threshold of class i;
Pth(i) - Peak threshold of the class i;
Brv(i) - Bandwidth reserved for class i;
Bu(i) - Bandwidth in use by class i;
Bref(i) - Bandwidth reference of class i (either, bandwidth reserved or committed of class i).

11. An apparatus for configuring of bandwidth in class based networks by over-provisioning bandwidth, said apparatus comprising:

a module for assigning during an initialisation phase an amount of bandwidth to each class of service, CoS, taking into consideration predefined quality of service, QoS, parameters, wherein said assigning comprises assigning to each CoS a fraction of the total bandwidth as peak threshold and reserving a fraction of the assigned peak threshold as a reserved bandwidth for said each of said CoS;

a module for maintaining the bandwidth currently under use in each CoS, wherein any resource request for bandwidth in a certain CoS is granted as long as the requested bandwidth plus the bandwidth currently used is not larger than the reserved bandwidth; and

a module for if there is received a resource request in a certain CoS such that it has not enough bandwidth reserved to accommodate said request, computing an over-reservation amount $Bov(i)$ by which the affected CoS is overprovisioned with bandwidth for future requests such that there is a surplus bandwidth of at least $Bov(i)$, wherein the bandwidth $Bov(i)$ is computed based on the amount of significance that the resource request has on the peak threshold assigned to said affected CoS, said amount of significance being computed based on the peak threshold minus the sum of the used bandwidth and the requested bandwidth in the affected CoS divided by said peak threshold.

12. The apparatus of claim 11, further comprising:

means for carrying out a method according to one of claims 1 to 10.

13. A computer program which when being executed on a computer enables said computer to carry out a method according to one of claims 1 to 10.

**Patentansprüche**

1. Verfahren zum Konfigurieren von Bandbreite in klassenbasierten Netzwerken durch Überbereitstellung von Bandbreite, wobei das Verfahren aufweist:

Zuweisen von einer Menge von Bandbreite während einer Initialisierungsphase zu jeder Serviceklasse CoS unter Berücksichtigung von vordefinierten Service-Qualitätsparametern QoS, wobei des Zuweisen umfasst:

Zuweisen eines Teils der totalen Bandbreite zu jeder CoS als Spitzenschwellwert und Reservieren eines Teils des zugewiesenen Spitzenschwellwerts als reservierte Bandbreite für jede CoS;

Aufrechterhalten der Bandbreite, die momentan unter Benutzung ist in jeder CoS, wobei jede Resourcenanfrage für Bandbreite in einer bestimmten CoS gewährt wird, so lange die angeforderte Bandbreite plus die momentan verwendete Bandbreite nicht größer ist als die reservierte Bandbreite; und

falls eine Resourcenanforderung in einer bestimmten CoS erhalten wird dergestalt, dass sie nicht genügend Bandbreite reserviert hat, um die Anforderung unterzubringen, Berechnen eines überreservierten Betrags $Bov(i)$ um den die betroffene CoS mit Bandbreite für zukünftige Anforderungen überversorgt wird, so dass es einen Überschuss an Bandbreite von zumindest $Bov(i)$ gibt, wobei die Bandbreite $Bov(i)$ berechnet wird basierend auf der Größe der Signifikanz, die die Resourcenanforderung auf den Spitzenschwellwert hat, der der betroffenen CoS zugewiesen ist, wobei der Betrag der Signifikanz berechnet wird basierend auf dem Spitzenschwellwert minus der Summe der verwendeten Bandbreite und der angeforderten Bandbreite in der betroffenen CoS geteilt durch den Spitzenschwellwert.

2. Verfahren nach Anspruch 1, wobei
die Bandbreite B$ov(i)$ berechnet wird basierend auf der Bandbreite, die in der betroffenen CoS verwendet wird mal dem Betrag, der die Signifikanz der Resourcenanforderung auf den Spitzenschwellwert angibt.

3. Verfahren nach Anspruch 1, wobei die addierte Bandbreite B$ov(i)$ berechnet wird basierend auf dem Folgenden:

$$Bov(i) = \frac{Bu(i)}{Pth(i)} * (Pth(i) - Bu(i) - Brq(i))$$

wobei

B$ov(i)$ - Überreservierung Bandbreite von Klasse $i$;
B$u(i)$ - Bandbreite in Verwendung durch Klasse $i$;
B$rq(i)$ - Bandbreite angefordert durch Klasse $i$;
B$rv(i)$ - Bandbreite reserviert für Klasse $i$;
Pth($i$) - Spitzenschwellwert von Klasse $i$;

und wobei die Überreservierung erfolgreich ist, wenn B$ov(i)$ > 0.

4. Verfahren nach einem der vorhergehenden Ansprüche, ferner aufweisend:

wenn die Berechnung einer neuen Überreservierung fehlschlägt, erneutes Anpassen der Spitzenbandbreite der betroffenen CoS, bei der die Überreservierung fehlgeschlagen ist, durch Verwenden eines noch verfügbaren Teils von Bandbreite von einer oder mehreren der anderen Serviceklassen.

5. Verfahren nach Anspruch 4, ferner aufweisend:

Berechnen eines Teils der noch verfügbaren Bandbreite für jede der anderen Serviceklassen, um die der Spitzenschwellwert für die anderen Klassen reduziert werden kann, wobei die noch verfügbare Bandbreite berechnet wird basierend auf dem Spitzenschwellwert der Klasse minus entweder der reservierten Bandbreite oder der versprochenen Bandbreite in der Klasse, und
Verringern der Spitzenbandbreite der anderen Klassen, um den berechneten Teil der noch verfügbaren Bandbreite, und
Addieren des reduzierten Betrags der Bandbreite der anderen Serviceklassen zu der Serviceklasse, für die die Überreservierung fehlgeschlagen ist.

6. Verfahren nach einem der Ansprüche vier bis fünf, wobei
der Teil, um den die Spitzenbandbreite reduziert werden soll, berechnet wird basierend auf einem Bandbreitenindex, der berücksichtigt das Ausmaß, in dem die reservierte Bandbreite tatsächlich verwendet wird, so dass je größer das Ausmaß, in dem sie verwendet wird, umso kleiner der für die Anpassung verwendbare Teil wird, und/oder
der Teil, um den die Spitzenbandbreite reduziert werden soll, berechnet wird, basierend auf einem Schwellwertindex, der berücksichtigt das Ausmaß, in dem die reservierte Bandbreite oder die versprochene Bandbreite dem Spitzenschwellwert nahekommen, so dass je größer das Ausmaß, in dem sie dem Spitzenschwellwert nahekommen, umso geringer wird der für eine Anpassung verwendbare Anteil.

7. Verfahren nach einem der Ansprüche bis 6, wobei
der Anteil, um den die Spitzenbandbreite reduziert werden soll, berechnet wird basierend auf einem Bandbreitenindex, der berechnet wird basierend auf einer Differenz zwischen der reservierten Bandbreite und der verwendeten Bandbreite, wobei die Differenz geteilt wird durch die reservierte Bandbreite.

8. Verfahren nach einem der Ansprüche 4 bis 7, wobei

der Anteil, um den die Spitzenbandbreite reduziert werden soll, berechnet wird basierend auf einem Schwellwertindex, der berechnet wird basierend auf der Differenz zwischen dem Spitzenschwellwert und entweder der reservierten Bandbreite oder der versprochenen Bandbreite, wobei die Differenz geteilt wird durch den Spitzenschwellwert.

9. Verfahren nach einem der Ansprüche 4 bis 8, wobei
   der Anteil berechnet wird basierend auf einer Kombination des Bandbreitenindex und des Schwellwertindex.

10. Verfahren nach einem der Ansprüche 4 bis 9, wobei
    Der Betrag der erneuten Anpassung für Klasse (i) Pth(i) berechnet wird

$$B\_Idx(j) = \left( \frac{Brv(j) - Bu(j)}{Brv(j)} \right)$$

$$Pth\_Idx(j) = \left( \frac{Pth(j) - Bref(j)}{Pth(j)} \right)$$

$$Brl\_Pth(j) = \left( \frac{B\_Idx(j) + Pth\_Idx(j)}{2} \right) * (Pth(j) - Bref(j))$$

$$Pth(i) \leftarrow \sum Brl\_Pth(j)$$

wobei

B_Idx(i) - Bandbreitenindex von Klasse i;
Pth_Idx(i) - Spitzenschwellwertindex von Klasse i;
Brl_Pth(i) - Bandbreite zur Freigabe vom Spitzenschwellwert von Klasse i;
Pth(i) - Spitzenschwellwert der Klasse i;
Brv(i) - Bandbreite reservert für Klasse i;
Bu(i) - Bandbreite in Verwendung durch Klasse i;
Bref(i) - Bandbreitenreferenz von Klasse i (entweder die reservierte oder versprochen Bandbreite von Klasse i).

11. Vorrichtung zum Konfigurieren von Bandbreite in klassenbasierten Netzwerken durch Überbereitstellung von Bandbreite, wobei die Vorrichtung aufweist:

ein Modul zum Zuweisen einer Menge von Bandbreiten während einer Initialisierungsphase zu jeder Serviceklasse CoS unter Berücksichtigung von vordefinierten Service-Qualitätsparametern QoS, wobei des Zuweisen umfasst:

Zuweisen eines Teils der totalen Bandbreite zu jeder CoS als Spitzenstellwert und Reservieren eines Teils des zugewiesenen Spitzenschwellwerts asl reservierte Bandbreite für jede CoS;
ein Modul zum Aufrechterhalten der Bandbreite, die momentan unter Benutzung ist in jeder CoS, wobei jede Resourcenanfrage für Bandbreite in einer bestimmten CoS gewährt wird, so lange die angeforderte Bandbreite plus die momentan verwendete Bandbreite nicht größer ist als die reservierte Bandbreite; und ein Modul zur Resourcenanforderung in einer bestimmten CoS erhalten wird dergestalt, dass sie nicht genügend Bandbreite reserviert hat, um die Anforderung unterzubringen, Berechnen eines überreservierten Betrags B*ov(i)* um den die betroffene CoS mit Bandbreite für zukünftige Anforderungen überversorgt wird, so dass es einen Überschuss an Bandbreite von zumindest B*ov(i)* gibt, wobei die Bandbreite B*ov(i)* berechnet wird basierend auf der Größe der Signifikanz, die die Resourcenanforderung auf den Spitzenschwellwert hat, der der betroffenen CoS zugewiesen ist, wobei der Betrag der Signifikanz berechnet wird basierend auf dem Spitzenschwellwert minus der Summe der verwendeten Bandbreite und der angeforderten Bandbreite in der betroffenen CoS geteilt durch den Spitzenschwellwert.

**12.** Vorrichtung nach Anspruch 11, ferner aufweisend:

eine Einrichtung zum Ausführen eines Verfahrens gemäß einem der Ansprüche 1 bis 10.

**13.** Computerprogramm das, wenn es auf einem Computer ausgeführt wird, den Computer in die Lage versetzt, ein Verfahren gemäß einem der Ansprüche 1 bis 10 auszuführen.

**Revendications**

**1.** Procédé de configuration de bande passante dans des réseaux à base de classes par surdimensionnement de la bande passante, ledit procédé consistant à :

attribuer au cours d'une phase d'initialisation une quantité de bande passante à chaque classe de service, CoS, en prenant en considération des paramètres de qualité de service, QoS, prédéfinis, ladite attribution comprenant une attribution à chaque CoS d'une fraction de la bande passante totale comme seuil de crête et une réservation d'une fraction du seuil de crête attribué comme bande passante réservée pour ladite chacune desdites CoS ; maintenir la bande passante actuellement utilisée dans chaque CoS, n'importe quelle demande de ressource pour bande passante dans une certaine CoS étant accordée tant que la bande passante demandée plus la bande passante actuellement utilisée n'est pas plus large que la bande passante réservée ; et si une requête de ressource est reçue dans une certaine CoS telle qu'elle n'a pas suffisamment de bande passante réservée pour permettre ladite demande, calculer une quantité de sur-réserve B*ov(i)* de laquelle la CoS affectée est surdimensionnée avec la bande passante pour des demandes futures de telle sorte qu'il existe une bande passante excédentaire d'au moins B*ov(i)*, la bande passante B*ov(i)* étant calculée sur la base de la quantité de signification que la demande de ressource a sur le seuil de crête attribué à ladite CoS affectée, ladite quantité de signification étant calculée sur la base du seuil de crête moins la somme de la bande passante utilisée et de la bande passante demandée dans la CoS affectée divisée par ledit seuil de crête.

**2.** Procédé selon la revendication 1, dans lequel
ladite bande passante B*ov(i)* est calculée sur la base de la bande passante utilisée dans ladite CoS affectée multipliée par ladite quantité indiquant ladite signification de ladite demande de ressource sur ledit seuil de crête.

**3.** Procédé selon la revendication 1, dans lequel ladite largeur de bande B*ov(i)* ajoutée est calculée sur la base de ce qui suit :

$$Bov(i) = \frac{Bu(i)}{Pth(i)} * (Pth(i) - Bu(i) - Brq(i))$$

où

B*ov(i)* - bande passante de sur-réserve de classe *i* ;
B*u(i)* - Bande passante utilisée par la classe *i* ;
B*rq(i)* - Bande passante nécessitée par la classe *i* ;
B*rv(i)* - Bande passante réservée à la classe *i* ;
Pth(*i*) - Seuil de crête de la classe *i* ;
et où la sur-réserve réussit lorsque B*ov(i)* > 0.

**4.** Procédé selon l'une des revendications précédentes, comprenant en outre :

si ledit calcul d'une nouvelle sur-réserve échoue, un réajustement de la bande passante de crête de la CoS affectée dans laquelle la sur-réserve a échoué en utilisant une part encore disponible de bande passante d'une ou plusieurs des autres classes de service.

**5.** Procédé selon la revendication 4, comprenant en outre à :

le calcul pour chacune des autres classes de service d'une fraction de la bande passante encore disponible de laquelle le seuil de crête pour les autres classes peut être réduit, la bande passante encore disponible étant calculée sur la base du seuil de crête de la classe moins l'une ou l'autre de la bande passante réservée ou de la bande passante engagée dans ladite classe, et

la réduction de la bande passante de crête desdites autres classes de la fraction calculée de la bande passante encore disponible, et

l'ajout de la quantité de bande passante réduite des autres classes de service à la classe de service où la sur-réserve a échoué.

6. Procédé selon l'une des revendications 4 à 5, dans lequel
ladite fraction de laquelle la bande passante de crête doit être réduite est calculée sur la base d'un indice de bande passante en prenant en compte la mesure dans laquelle la bande passante réservée est réellement utilisé de telle sorte que plus elle est utilisée dans une mesure importante, plus la fraction utilisable pour le réglage est réduite, et/ou ladite fraction de laquelle la bande passante de crête doit être réduite est calculée sur la base d'un indice de seuil en prenant en compte la mesure dans laquelle la bande passante réservée ou la bande passante engagée se rapproche du seuil de crête de telle sorte que plus elle se rapproche du seuil de crête dans une mesure importante, plus la fraction utilisable pour le réglage est réduite.

7. Procédé selon l'une des revendications 4 à 6, dans lequel
ladite fraction de laquelle la bande passante de crête doit être réduite est calculée sur la base d'un indice de bande passante calculé sur la base d'une différence entre la bande passante réservée et la bande passante utilisée, ladite différence étant divisée par la bande passante réservée.

8. Procédé selon l'une des revendications 4 à 7, dans lequel
ladite fraction de laquelle la bande passante de crête doit être réduite est calculée sur la base d'un indice de seuil calculé sur la base de la différence entre le seuil de crête et l'une ou l'autre de la bande passante réservée et de la bande passante engagée, ladite différence étant divisée par le seuil de crête.

9. Procédé selon l'une des revendications 4 à 8, dans lequel
ladite fraction est calculée sur la base d'une combinaison dudit indice de bande passante et dudit indice de seuil.

10. Procédé selon l'une des revendications 4 à 9, dans lequel
ladite quantité de réajustement pour la classe (i) Pth(i) est calculée sur la base de

$$B\_Idx(j) = \left( \frac{Brv(j) - Bu(j)}{Brv(j)} \right)$$

$$Pth\_Idx(j) = \left( \frac{Pth(j) - Bref(j)}{Pth(j)} \right)$$

$$Brl\_Pth(j) = \left( \frac{B\_Idx(j) + Pth\_Idx(j)}{2} \right) * (Pth(j) - Bref(j))$$

$$Pth(i) \leftarrow \sum Brl\_Pth(j)$$

où

B_Idx(i) - Indice de bande passante de classe i ;
Pth_Idx(i) - Indice de seuil de crête de classe i ;
Brl_Pth(i) - Bande passante pour sortir du seuil de crête de classe i ;
Pth(i) - Seuil de crête de classe i ;
Brv(i) - Bande passante réservée pour la classe i ;
Bu(i) - Bande passante utilisée par la classe i ;

**EP 2 037 636 B1**

Bref(i) - Référence de bande passante de classe i (l'une ou l'autre d'une bande passante réservée ou engagée de classe i).

11. Appareil de configuration de bande passante dans des réseaux à base de classes par surdimensionnement de la bande passante, ledit appareil comprenant :

un module destiné à attribuer au cours d'une phase d'initialisation une quantité de bande passante à chaque classe de service, CoS, en prenant en considération les paramètres de la qualité de service prédéfinie, QoS, ladite attribution consistant à attribuer à chaque CoS une fraction de la bande passante totale comme seuil de crête et réserver une fraction du seuil de crête attribué comme bande passante réservée pour ladite chacune desdites CoS ;
un module destiné à maintenir la bande passante actuellement utilisée dans chaque CoS, n'importe quelle demande de ressource pour la bande passante dans une certaine CoS étant accordée tant que la bande passante demandée plus la bande passante actuellement utilisée n'est pas plus large que la bande passante réservée ; et
un module destiné à calculer, si une requête de source est reçue dans une certaine CoS telle qu'elle n'a pas suffisamment de bande passante réservée pour permettre ladite demande, une quantité de sur-réserve B$ov(i)$ de laquelle la CoS affectée est surdimensionnée avec la bande passante pour des demandes futures de telle sorte qu'il existe une bande passante excédentaire d'au moins B$ov(i)$, la bande passante B$ov(i)$ étant calculée sur la base de la quantité de signification que la demande de ressource a sur le seuil de crête attribué à ladite CoS affectée, ladite quantité de signification étant calculée sur la base du seuil de crête moins la somme de la bande passante utilisée et de la bande passante demandée dans la CoS affectée divisée par ledit seuil de crête.

12. Appareil selon la revendication 11, comprenant en outre :

des moyens pour effectuer un procédé selon l'une des revendications 1 à 10.

13. Programme informatique qui, lorsqu'il est en cours d'exécution sur un ordinateur, permet audit ordinateur d'effectuer un procédé selon l'une des revendications 1 à 10.

**Domain A**

Edge · Edge · Core · Core · Core · Core · Edge · Edge · Edge

Legend:
- Edge — ASAC-E
- Core — ASAC-C
- RM — Central Resource Manager
- Node without agents

**Domain B**

RM

Edge

**Fig. 1**

**Content Distribution
Applications**

| | |
|---|---|
| **Application
Layer** | Network Agent ◄──► **Application
Interface** |
| | QoS Approach |
| **Network
Layer** | **QoS Control
Interface** |
| IP  Unicast Routing | **Communication/
routing Interface** |

Data Plane    Control Plane    ASAC Interface

**Fig. 2**

**Fig. 3**

Legend:
- → RESERVE(I)
- → RESPONSE
- ⊙ ASAC-E Agent
- ○ ASAC-C Agent

**Paths from I1**

| Index | Nodes |
|---|---|
| 0 | C1, E1 |
| 1 | C1, E2 |
| 2 | C2, C1, E1 |
| 3 | C2, C1, E2 |
| 4 | C2, C3, E2 |
| 5 | C2, C3, E3 |

**Paths from I2**

| Index | Nodes |
|---|---|
| 0 | C2, C1, E1 |
| 1 | C2, C1, E2 |
| 2 | C2, C3, E2 |
| 3 | C4, C3, E2 |
| 4 | C4, C3, E3 |
| 5 | C4, E3 |

EP 2 037 636 B1

(1)
Performs admission control

(7)
- Denies R$i$
- Triggers the requester application

(2)
- Accepts R$i$
- Triggers requester application with confirmation

$B_{rq} \leq (B_u + B_{rv}) - T_h$

Receives R$i$
(S$_{obj}$, E)

Return to Idle

Return to Idle

Return to Idle

Return to Idle

R$_{dj}$ < 0

ASAC-E Idle

(6)
- Re-adjust local resources
- Send RESERVE to E with R$i$(S$_{obj}$, B$_{ov}$, E)

Return to Idle

R$_{dj}$ ≥ 0

Return to Idle

$B_{rq} > (B_u + B_{rv}) - T_h$

(3)
Computes B$_{ov}$

Return to Idle

Computes re-adjustment (R$_{dj}$)

(5)

B$_{ov}$ ≤ 0

B$_{ov}$ > 0

(4)
- Updates reservation
- Sends RESERVE to E with R$i$ (S$_{obj}$, B$_{ov}$, E)

**Fig. 4**

EP 2 037 636 B1

EP 2 037 636 B1

**a)**

|  |  |  | Bootleneck of the path | | |
| Path | Nodes | Min. Link | AF (24) | EF (18) | BE (18) |
|---|---|---|---|---|---|
| 0 | I, C1, E1 | 60 | 0, 6 | 0, 4.5 | 0, 4.5 |
| 1 | I, C1, C4, E1 | 60 | 0, 6 | 0, 4.5 | 0, 4.5 |
| 2 | I, C1, C4, E2 | 60 | 0, 6 | 0, 4.5 | 0, 4.5 |
| 3 | I, C2, C3, E3 | 100 | 0, 10 | 0, 7.5 | 0, 7.5 |

**b)**

| Class | Resource |
|---|---|
| AF | 0, 10 |
| EF | 0, 7.5 |
| BE | 0, 7.5 |

**c)**

| Class | Resource |
|---|---|
| AF | 0, 6 |
| EF | 0, 4.5 |
| BE | 0, 4.5 |

**d)**

| Class | Resource |
|---|---|
| AF | 0, 10 |
| EF | 0, 7.5 |
| BE | 0, 7.5 |

**e)**

| Class | Resource |
|---|---|
| AF | 0, 6 |
| EF | 0, 4.5 |
| BE | 0, 4.5 |

**f)**

| Class | Resource |
|---|---|
| AF | 0, 10 |
| EF | 0, 7.5 |
| BE | 0, 7.5 |

Network nodes: I, C1, C2, C3, C4, E1, E2, E3

Link labels: 100Mb, 100Mb, 100Mb, 100Mb, 60Mb, 60Mb, 60Mb, 100Mb, 100Mb, 100Mb

**Fig. 5**

| Path | Nodes | Min. Link | AF (24) | EF (18) | BE (18) |
|------|-------|-----------|---------|---------|---------|
| 0 | I, C1, E1 | 60 | 5, 6 — 7, 11.5 | 0, 4.5 | 3, 4.5 |
| 1 | I, C1, C4, E1 | 60 | 6, 6 | 3, 4.5 | 3, 4.5 |
| 2 | I, C1, C4, E2 | 60 | 0, 6 | 3, 4.5 | 3, 4.5 |
| 3 | I, C2, C3, E3 | 100 | 0, 10 | 0, 7.5 | 0, 7.5 |

c)

b) Bov = 3.5

$R_n$ (Sobj, E1)   Sobj (Fn, AF, 2Mb, E1)

a)

RESERVE
RESPONSE

d)

| Class | Resource |
|-------|----------|
| AF | 5, 10 — 7, 15.5 |
| EF | 3, 7.5 |
| BE | 3, 7.5 |

f)

| Class | Resource |
|-------|----------|
| AF | 5, 6 — 7, 11.5 |
| EF | 0, 4.5 |
| BE | 3, 4.5 |

| Class | Resource |
|-------|----------|
| AF | 0, 10 |
| EF | 0, 7.5 |
| BE | 0, 7.5 |

| Class | Resource |
|-------|----------|
| AF | 6, 6 |
| EF | 3, 4.5 |
| BE | 3, 4.5 |

| Class | Resource |
|-------|----------|
| AF | 0, 10 |
| EF | 3, 7.5 |
| BE | 3, 7.5 |

e)   g)

100Mb   60Mb   100Mb

## Fig. 6

**Notation of the Resource Tuple (x; y):**
**X – Used resources (Mb/s)**
**Y – Reserved resources (Mb/s)**

d)

| Path | Nodes | Min. Link | AF(24)—34.48 | EF(18)—11.25 | BE(18)—14.27 |
|------|-------|-----------|--------------|--------------|--------------|
| 0 | I; C1; E1 | 60 | 22.5; 23 | 0; 4.5 | 3; 4.5 |
| 1 | I; C1; C4; E1 | 60 | 6; 6 | 3; 4.5 | 3; 4.5 |
| 2 | I; C1; C4; E2 | 60 | 9; 12.8 | 3; 4.5 | 3; 4.5 |
| 3 | I; C2; C3; E3 | 100 | 0; 10 | 0; 7.5 | 0; 7.5 |

$Brl\_Pth(EF) = 6.75$
$Brl\_Pth(BE) = 3.73$ } c)
$\sum Brl\_Pth = 10.48$
$Bov(AF) = -1$  b)
$R_{n+y}(S_{obj}; E1)$ — $S_{obj}(F_{n+y}; AF; 3Mb)$

———— RESERVE
———— RESPONSE

Sobj composition (a; b; c):
- a: Flow ID;
- b: Service Class;
- c: Required bandwidth( Mb/s).

| Class | Resource |
|-------|----------|
| AF | 26.5; 27 |
| EF | 3; 7.5 |
| BE | 3; 7.5 |

| Class | Resource |
|-------|----------|
| AF | 22.5; 23 |
| EF | 0; 4.5 |
| BE | 3; 4.5 |

| Class | Resource |
|-------|----------|
| AF | 0; 10 |
| EF | 0; 7.5 |
| BE | 0; 7.5 |

| Class | Resource |
|-------|----------|
| AF | 9; 12.8 |
| EF | 3; 4.5 |
| BE | 3; 4.5 |

| Class | Resource |
|-------|----------|
| AF | 0; 10 |
| EF | 3; 7.5 |
| BE | 3; 7.5 |

a)

I
100Mb
100Mb
C2
C1
60Mb
100Mb
C4
C3
E3
60Mb
100Mb
100Mb
100Mb
100Mb
E1
E2

## Fig. 7

**Notation of the Resource Tuple (x; y):**
**X – Used resources (Mb/s)**
**Y – Reserved resources (Mb/s)**

| Pth | Nodes | Min. Link | AF (34,48) | EF (11,25) | BE (14,27) |
|---|---|---|---|---|---|
| 0 | I; C1; E1 | 60 | 25.5; 30.7 | 0; 4.5 | 3; 4.5 |
| 1 | I; C1; C4; E1 | 60 | 6; 6 | 3; 4.5 | 3; 4.5 |
| 2 | I; C1; C4; E2 | 60 | 9; 12.8 | 3; 4.5 | 3; 4.5 |
| 3 | I; C2; C3; E3 | 100 | 0; 10 | 0; 7.5 | 0; 7.5 |

Bov(AF)= 5.8  a)

b)
| Class | Resource |
|---|---|
| AF | 26.5; 27 — 29.5; 35.8 |
| EF | 3; 7.5 |
| BE | 3; 7.5 |

d)
| Class | Resource |
|---|---|
| AF | 22.5; 23 — 25.5; 31.8 |
| EF | 0; 4.5 |
| BE | 3; 4.5 |

| Class | Used | Resv |
|---|---|---|
| AF | 0 | 10 |
| EF | 0 | 7.5 |
| BE | 0 | 7.5 |

| Class | Resource |
|---|---|
| AF | 9; 12.8 |
| EF | 3; 4.5 |
| BE | 3; 4.5 |

| Class | Resource |
|---|---|
| AF | 0; 10 |
| EF | 3; 7.5 |
| BE | 3; 7.5 |

RESERVE
RESPONSE

c) I
100Mb
100Mb
f)
C2
C1
60Mb
100Mb
e)
C4
C3
100Mb
E3
60Mb
100Mb
100Mb
E1
E2

**Fig. 8**

EP 2 037 636 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003081626 A

**Non-patent literature cited in the description**

- **S. BLAKE ; D. BLACK ; M. CARLSON ; E. DAVIES ; Z. WANG ; W. WEISS.** An architecture for differentiated services. *RFC 2475, IETF,* December 1998
- **P. PAN ; E. HAHNE ; H. SCHULZRINNE.** BGRP: A Tree-Based Aggregation Protocol for Inter-domain Reservations. *Journal of Communications and Networks,* June 2000, vol. 2 (2
- **R. SOFIA ; R. GUERIN ; P. VEIGA.** SICAP, a Shared-segment Inter-domain Control Aggregation Protocol. *High Performance Switching and Routing, HPSR 2003,* June 2003
- **J. MOY.** OSPF Version 2. *The Internet Engineering Task Force - IETF, RFC2328,* April 1998
- **K. LU ; G. XIAO ; I. CHLAMTAC.** Analysis of blocking probability for distributed lightpath establishment in WDM optical networks. *IEEE/ACM Trans, Netw.,* 01 February 2005, vol. 13, 187-197